# FASCICULE DE BREVET EUROPEEN

(11) **EP 1 773 660 B1**
(45) Date de publication et mention de la délivrance du brevet: **10.12.2008**
(21) Numéro de dépôt: 05797577.3
(22) Date de dépôt: 01.08.2005
(51) Int. Cl.: B64D 27/26

(54) **ENSEMBLE MOTEUR POUR AERONEF**
FLUGZEUGMOTOREINHEIT
AIRCRAFT ENGINE UNIT

(30) Priorité: 04.08.2004 FR 0451784
(43) Date de publication de la demande: 18.04.2007
(73) Titulaire: AIRBUS France, 31060 Toulouse (FR)
(72) Inventeur: DIOCHON, Lionel, F-31500 TOULOUSE (FR); SEGUIN, Guillaume, F-13006 MARSEILLE (FR)
(74) Mandataire: Poulin, Gérard
(86) Numéro de dépôt international: PCT/FR2005/050637
(87) Numéro de publication internationale: WO 2006/021721

(56) Documents cités:
- EP-A- 1 053 936
- EP-A- 1 053 938

## Description

### DOMAINE TECHNIQUE

La présente invention se rapporte de façon générale à un ensemble moteur pour aéronef, du type comprenant un turbomoteur tel qu'un turboréacteur, un mât d'accrochage, ainsi qu'une pluralité d'attaches moteur interposées entre ce mât d'accrochage et le turboréacteur.

### ÉTAT DE LA TECHNIQUE ANTÉRIEURE

De façon connue, le mât d'accrochage d'un tel ensemble moteur est prévu pour constituer l'interface de liaison entre un turboréacteur et une voilure de l'aéronef équipée de cet ensemble. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le mât comporte une structure rigide, par exemple du type « caisson », c'est-à-dire formée par l'assemblage de longerons et panneaux latéraux raccordés entre eux par l'intermédiaire de nervures transversales.

Un système de montage est interposé entre le moteur et la structure rigide du mât, ce système comportant globalement une pluralité d'attaches moteur, réparties habituellement en attache(s) avant solidaire(s) du carter de soufflante du moteur et en attache(s) arrière solidaire(s) du carter central de ce même moteur.

De plus, le système de montage comprend un dispositif de reprise des efforts de poussée générés par le moteur. Dans l'art antérieur, ce dispositif prend par exemple la forme de deux bielles latérales raccordées d'une part à une partie arrière du carter de soufflante du moteur, et d'autre part à une attache montée sur la structure rigide du mât, par exemple une attache arrière.

A titre indicatif, il est précisé que le mât d'accrochage est associé à un second système de montage interposé entre ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Dans les réalisations classiques de l'art antérieur, pour assurer correctement la reprise de la totalité des efforts et des moments transmis par le turboréacteur à la structure rigide du mât d'accrochage, les attaches moteur sont généralement conçues de façon complexe et coûteuse.

Cet arrière-plan technologique est illustré par le document EP-A-1 053 936.

### EXPOSÉ DE L'INVENTION

L'invention a donc pour but de proposer un ensemble pour aéronef remédiant au moins partiellement à l'inconvénient mentionné ci-dessus relatif aux réalisations de l'art antérieur, et également de présenter un aéronef disposant d'au moins un tel ensemble.

Pour ce faire, l'invention a pour objet un ensemble moteur pour aéronef comprenant un turbomoteur, un mât d'accrochage ainsi qu'une pluralité d'attaches moteur interposées entre le mât d'accrochage et le turbomoteur. Selon l'invention, la pluralité d'attaches moteur comprend une attache conçue de manière à assurer uniquement la reprise des efforts s'exerçant selon une direction transversale du turbomoteur, cette attache comportant une ferrure intermédiaire assemblée sur une première ferrure solidaire du mât d'accrochage par l'intermédiaire de deux axes rotulés orientés parallèlement selon une direction verticale du turbomoteur, ainsi qu'un pion orienté selon une direction longitudinale du turbomoteur et solidaire de la ferrure intermédiaire, ce pion étant monté avec jeu dans la direction longitudinale sur une seconde ferrure solidaire du turbomoteur.

Avantageusement, l'ensemble moteur selon l'invention comporte une attache, de préférence une attache avant, qui présente une conception simple et peu coûteuse, et qui permet d'assurer uniquement la reprise des efforts s'exerçant selon la direction transversale.

En effet, la combinaison de la liaison à jeu selon la direction longitudinale, du type liaison « monoball », et des deux liaisons rotules orientées selon la direction verticale et obtenues respectivement à l'aide des deux axes rotulés, conduit alors cette attache de conception simplifiée à reprendre uniquement les efforts s'exerçant selon la direction transversale du turbomoteur. Comme cela sera exposé de façon détaillée ci-après, le fait de reprendre les efforts s'exerçant selon la direction transversale à l'aide d'attaches avant permet de simplifier considérablement la conception et le dimensionnement de toutes les attaches moteur.

A ce titre, l'attache conçue de manière à assurer uniquement la reprise des efforts s'exerçant selon la direction transversale est de préférence solidarisée d'une part à l'avant d'une structure rigide du mât d'accrochage, et d'autre part sur une partie annulaire périphérique d'un carter de soufflante du turbomoteur.

De plus, un plan défini par un axe longitudinal du turbomoteur et la direction verticale de celui-ci constitue un plan de symétrie pour cette attache conçue de manière à assurer uniquement la reprise des efforts s'exerçant selon la direction transversale.

Préférentiellement l'attache conçue de manière à assurer uniquement la reprise des efforts s'exerçant selon la direction transversale constitue une première attache avant, et la pluralité d'attaches moteur comprend en outre une seconde attache avant également conçue de manière à assurer la reprise des efforts s'exerçant selon la direction transversale. Dans un tel cas, les deux attaches avant sont alors agencées de façon décalée l'une par rapport à l'autre dans la direction verticale du turbomoteur.

En d'autres termes, l'ensemble moteur est réalisé de telle manière que la reprise du moment s'exerçant selon la direction longitudinale du turbomoteur s'effectue par l'intermédiaire d'attaches avant décalées en hauteur et aptes à assurer la reprise des efforts s'exerçant selon la direction transversale.

Or les attaches avant étant susceptibles d'être solidarisées indifféremment sur un carter de soufflante ou sur un carter central du turbomoteur, il est alors bien entendu possible de les écarter fortement l'une de l'autre dans la direction verticale, par exemple en montant l'une d'entre elles sur le carter de soufflante, et l'autre sur le carter central.

Comme indiqué précédemment, cet écartement important a pour avantage de pouvoir simplifier considérablement la conception des attaches moteur, en raison du fait que les efforts qu'elles doivent reprendre, associés au moment selon la direction longitudinale, sont naturellement affaiblis par rapport à ceux rencontrés dans les solutions classiques de l'art antérieur dans lesquelles la reprise de ce même moment était assurée par deux attaches arrière solidarisées au carter central, qui ne pouvaient bien entendu pas être aussi éloignées l'une de l'autre.

Il est précisé que les deux attaches avant pourraient toutes les deux être agencées sur le carter de soufflante, à des hauteurs différentes, sans sortir du cadre de l'invention.

D'autre part, il est indiqué que si les deux attaches avant sont agencées de façon décalée l'une par rapport à l'autre dans la direction verticale du turbomoteur afin d'assurer la reprise du moment s'exerçant selon la direction longitudinale, cela n'exclut pas le fait qu'elles puissent également être décalées l'une par rapport à l'autre dans la direction longitudinale et/ou dans la direction transversale.

De manière préférentielle, la seconde attache avant est solidaire d'un carter central du turbomoteur, et conçue de manière à assurer uniquement la reprise des efforts s'exerçant selon les directions transversale et verticale. Dans cette configuration préférée où la première attache avant de conception simplifiée est solidaire de la partie annulaire périphérique du carter de soufflante et où la seconde attache avant est solidaire du carter central, il est effectivement facilement possible d'obtenir un écartement selon la direction verticale, entre les deux attaches avant, qui est très élevé par rapport à celui rencontré antérieurement et limité à la largeur de la structure rigide du mât d'accrochage.

En outre, la pluralité d'attaches peut également comporter une attache arrière conçue de manière à assurer la reprise des efforts s'exerçant selon les directions longitudinale, transversale et verticale.

De préférence, chacune de la pluralité d'attaches moteur est traversée par le plan défini par l'axe longitudinal du turbomoteur, et la direction verticale de celui-ci. Ainsi, il est clair que le fait de centrer toutes les attaches moteur sur le plan susmentionné, et donc de ne pas prévoir d'attaches écartées l'une de l'autre dans la direction transversale, permet de diminuer sensiblement la largeur du mât d'accrochage selon cette même direction transversale. Ainsi, la diminution de largeur observée permet avantageusement de réduire les perturbations du flux secondaire dans le canal annulaire de soufflante, causées par le mât d'accrochage.

L'invention a également pour objet un aéronef comprenant au moins un ensemble moteur tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un ensemble moteur pour aéronef, selon un mode de réalisation préféré de la présente invention ;
- la figure 2 représente une vue détaillée en perspective de la première attache moteur avant de l'ensemble moteur de la figure 1, interposée entre le carter de soufflante du turboréacteur et la structure rigide du mât d'accrochage ;
- la figure 3 est une vue de côté de la première attache moteur avant représentée sur la figure 2 ; et
- la figure 4 est une vue de dessus de la première attache moteur avant représentée sur les figures 2 et 3.

### EXPOSÉ DÉTAILLÉ DE MODES DE RÉALISATION PARTICULIERS

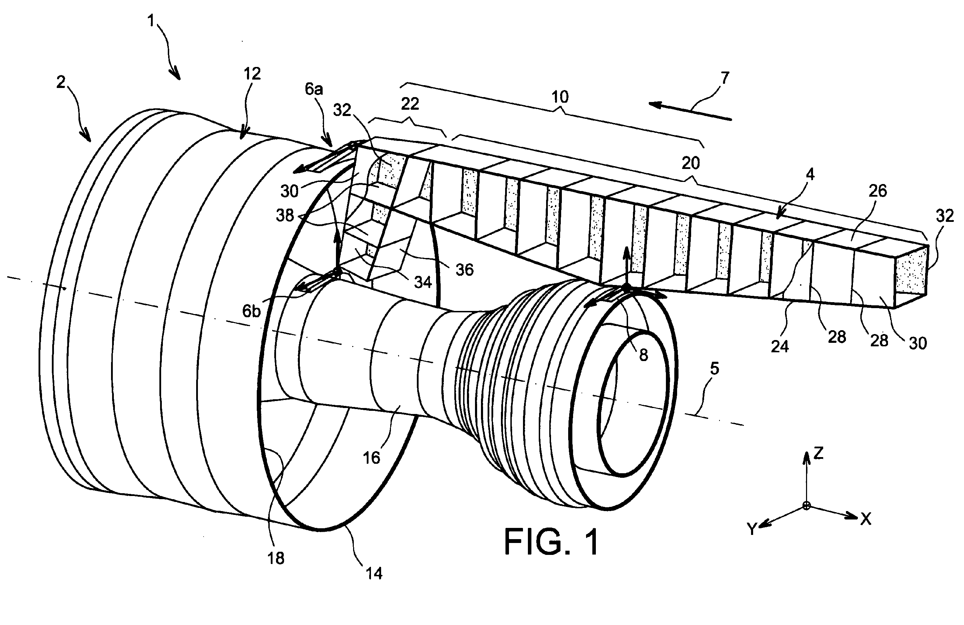

En référence à la figure 1, on voit un ensemble moteur 1 pour aéronef selon un mode de réalisation préféré de la présente invention, cet ensemble 1 étant destiné à être fixé sous une aile d'aéronef (non représenté).

Globalement, l'ensemble moteur 1 comporte un turbomoteur 2 qui sera considéré comme étant un turboréacteur 2 dans la suite de la description, un mât d'accrochage 4, ainsi qu'une pluralité d'attaches moteur 6a, 6b, 8 assurant la fixation du turboréacteur 2 sous ce mât 4. A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du turboréacteur 2 qui est parallèle à un axe longitudinal 5 de ce turboréacteur 2, Y la direction transversale de ce turboréacteur 2, et Z la direction verticale ou de la hauteur, ces trois directions étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seule une structure rigide 10 du mât d'accrochage 4 a été représentée. Les autres éléments constitutifs non représentés de ce mât 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

De la même façon, l'ensemble 1 est équipé d'un dispositif (non représenté) de reprise des efforts de poussée générés par le turboréacteur 2, qui est identique ou similaire à ceux rencontrés antérieurement, et qui ne sera donc pas non plus décrit davantage.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Les carters 12 et 16 sont bien entendu solidarisés l'un à l'autre, d'une façon classique et connue de l'art antérieur.

Comme on peut l'apercevoir sur la figure 1, la pluralité d'attaches moteur 6a, 6b, 8 comprend deux attaches avant 6a, 6b chacune conçue de manière à assurer la reprise des efforts s'exerçant selon la direction transversale Y, et agencées de façon décalée l'une par rapport à l'autre dans la direction verticale Z.

Plus précisément, la première attache avant 6a est solidarisée d'une part à l'avant de la structure rigide 10 du mât 4, et d'autre part sur une partie annulaire périphérique 18 du carter de soufflante 12, de préférence sur l'arrière de cette partie 18 comme cela est représenté schématiquement sur la figure 1.

De plus, cette première attache moteur avant 6a est montée sur la portion la plus haute de cette partie annulaire périphérique 18, impliquant qu'elle est traversée par un plan fictif (non représenté) défini par l'axe longitudinal 5 et la direction Z. A cet égard, il est noté que le plan fictif qui vient d'être mentionné est un plan de symétrie pour la première attache avant 6a.

Comme cela sera détaillé ultérieurement, il est noté que l'une des particularités de l'invention réside dans le fait que cette première attache 6a est conçue de manière à assurer uniquement la reprise des efforts s'exerçant selon la direction Y du turboréacteur, et non selon les directions X et Z.

Par ailleurs, la seconde attache avant 6b est solidarisée d'une part à l'avant de la structure rigide 10 du mât 4, et d'autre part sur le carter central 16, de sorte qu'elle est donc située au dessous de la première attache avant 6a. De plus, cette seconde attache moteur avant 6b est montée sur la portion annulaire la plus haute du carter central 16. A ce titre, il est noté que dans le mode de réalisation préféré représenté, les deux attaches avant 6a, 6b sont uniquement décalées l'une de l'autre dans la direction Z, et non dans les directions X et Y. Cependant, il aurait bien entendu été possible d'opérer un tel décalage, sans sortir du cadre de l'invention.

En outre, ce positionnement particulier de la seconde attache 6b implique qu'elle est également traversée par le plan fictif indiqué précédemment et défini par l'axe longitudinal 5 et la direction Z, ce plan fictif constituant aussi un plan de symétrie pour cette seconde attache avant 6b.

Comme cela est représenté schématiquement par les flèches de la figure 1, la seconde attache avant 6b est conçue de manière à assurer uniquement la reprise des efforts s'exerçant selon la direction Y et selon la direction Z du turboréacteur, mais pas ceux s'exerçant selon la direction X.

La pluralité d'attaches moteur 6a, 6b, 8 comprend en outre une unique attache arrière 8, sur laquelle peut par exemple être fixé le dispositif de reprise des efforts de poussée de l'ensemble 1. Cette attache arrière 8 est solidarisée d'une part à l'arrière du carter central 16, de préférence au niveau d'une extrémité arrière de ce carter 16, et d'autre part à la structure rigide 10 du mât 4, de préférence au niveau d'une partie sensiblement centrale de celle-ci considérée dans la direction X.

De la même manière que pour la seconde attache avant 6b, l'attache arrière 8 est réalisée selon toute forme connue de l'homme du métier, telle que par exemple celle relative à l'assemblage de manilles et de ferrures. Cependant, cette attache arrière 8 est quant à elle conçue de manière à assurer la reprise des efforts s'exerçant selon les trois directions X, Y et Z.

Par conséquent, avec la pluralité d'attaches moteur qui vient d'être décrite, la reprise des efforts s'exerçant selon la direction X s'effectue à l'aide de l'attache arrière 8, celle des efforts s'exerçant selon la direction Y s'effectue à l'aide des trois attaches 6a, 6b, 8, et celle des efforts s'exerçant selon la direction Z est réalisée par l'intermédiaire de la première attache avant 6a et de l'attache arrière 8.

D'autre part, la reprise du moment s'exerçant selon la direction X est opérée conjointement à l'aide des deux attaches avant 6a, 6b, celle du moment s'exerçant selon la direction Y est réalisée conjointement à l'aide de la seconde attache avant 6b et de l'attache arrière 8, et celle du moment s'exerçant selon la direction Z s'effectue conjointement à l'aide des trois attaches moteur 6a, 6b, 8.

Toujours en référence à la figure 1, on voit que dans le mode de réalisation préféré représenté, la structure rigide 10 du mât d'accrochage 4 comporte un caisson central 20 s'étendant sensiblement selon la direction X, ainsi qu'un caisson avant 22 solidaire du caisson central 20 et s'étendant sensiblement selon la direction verticale Z.

Plus précisément, le caisson central 20 situé à l'arrière du caisson avant 22 est réalisé par l'assemblage de longerons inférieur 24 et supérieur 26 raccordés entre eux par l'intermédiaire de nervures transversales 28, de préférence orientées dans des plans YZ. Les longerons 24 et 26 sont quant à eux orientés selon des plans XY, ou bien selon des plans légèrement inclinés par rapport à ces derniers.

Il est précisé que le longeron inférieur 24 et le longeron supérieur 26 peuvent chacun être réalisés d'une seule pièce, ou bien consister en un assemblage de plusieurs portions de longerons fixées rigidement les unes aux autres.

D'autre part, le caisson central 20 est de préférence fermé latéralement de part et d'autre par deux parois latérales 30, 32, qui s'étendent globalement chacune dans un plan XZ.

Une partie supérieure du caisson avant 22 est située dans le prolongement avant du caisson central 20.

En d'autres termes, le caisson avant 22 s'étendant sensiblement selon la direction Z dispose d'un longeron avant 34 et d'un longeron arrière 36 qui sont tous les deux parallèles à la direction Y, et qui sont raccordés entre eux par l'intermédiaire de nervures transversales 38, de préférence orientées dans des plans XY. A ce titre, il est noté que la nervure transversale 38 la plus haute est constituée par l'extrémité avant du longeron supérieur 26 du caisson central 20, cette extrémité avant assurant également une fermeture supérieure du caisson avant 22. De même, la deuxième nervure transversale 38 la plus haute est constituée par l'extrémité avant du longeron inférieur 24 de ce caisson central 20.

De préférence, le caisson avant 22 est fermé latéralement de part et d'autre par les deux parois latérales 30, 32 assurant également la fermeture latérale du caisson central 20.

De cette manière, au même titre que la structure rigide 10 considérée dans son ensemble, les deux parois latérales 30, 32 disposent chacune d'une forme globale de « L », dont la base de ce L est sensiblement orientée selon la direction Z.

En ce qui concerne la structure rigide 10 du mât 4, il est noté d'une part que la première attache avant 6a est de préférence solidarisée sur une partie supérieure du longeron avant 34 qui est orienté dans un plan YZ, et d'autre part que la seconde attache avant 6b est de préférence solidarisée sur la nervure transversale 38 la plus basse, assurant la fermeture inférieure du caisson avant 22.

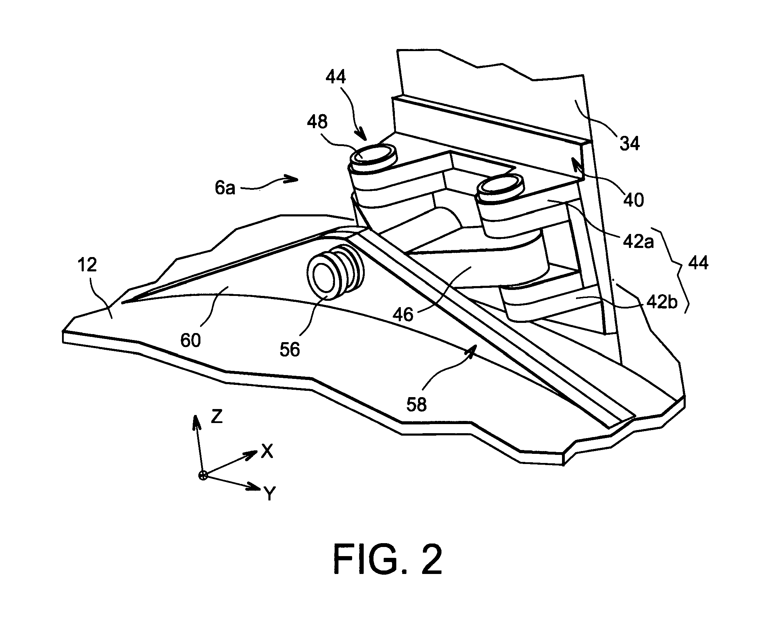

A présent en référence aux figures 2 à 4, il va être décrit la première attache avant 6a, uniquement apte à reprendre les efforts s'exerçant selon la direction Y.

Cette attache avant 6a de conception simplifiée présente tout d'abord une première ferrure 40, éventuellement réalisée par assemblage de plusieurs pièces métalliques, qui est solidarisée au longeron avant 34 du caisson avant 22, et plus généralement à la structure rigide 10 du mât 4.

La première ferrure 40 présente une symétrie par rapport au plan fictif vertical passant par l'axe longitudinal 5 du turboréacteur 2, et comprend en particulier deux paires de têtes 44 respectivement disposées de part et d'autre de ce plan.

Chaque paire de têtes 44 comprend une tête supérieure 42a et une tête inférieure 42b espacée de cette dernière dans la direction Z, chacune de ces deux têtes 42a, 42b pouvant être double et étant orientée dans un plan XY. En outre, la tête supérieure 42a présente un orifice traversant 44a orienté selon la direction Z, de même que la tête inférieure 42b présente un orifice traversant 44b également orienté selon la direction Z, et situé en regard de l'orifice 44a.

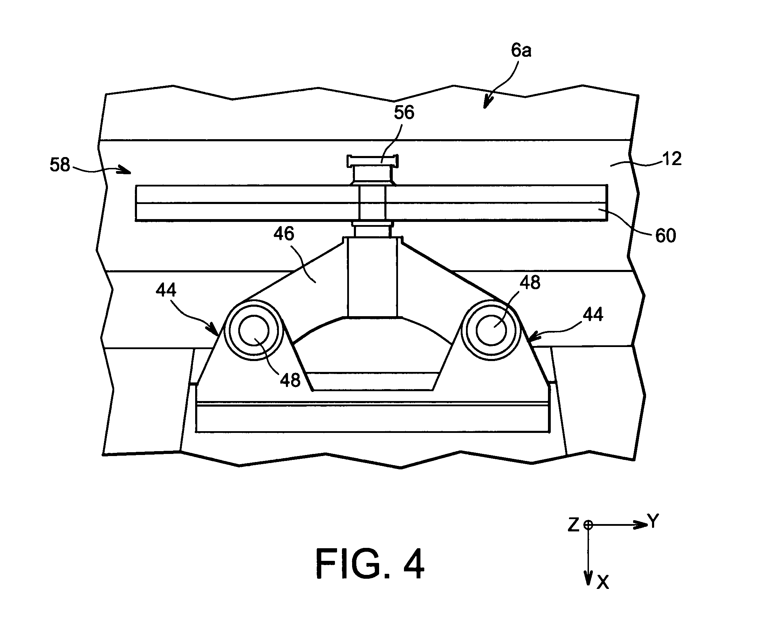

Une ferrure intermédiaire 46, de préférence en forme générale de « V » s'étendant dans un plan XY comme cela est visible sur la figure 4, est raccordée à la première ferrure 40 par l'intermédiaire de deux axes rotulés 48 chacun orienté selon la direction Z.

Plus précisément, chacune des deux extrémités de la ferrure intermédiaire 46 en forme de V est montée sur l'une des deux paires de têtes 44 à l'aide de l'un des deux axes rotulés 48, impliquant que ces derniers sont disposés de façon symétrique par rapport au plan fictif susmentionné. A cet égard, il est précisé que ce plan fictif constitue aussi un plan de symétrie pour la ferrure intermédiaire 46.

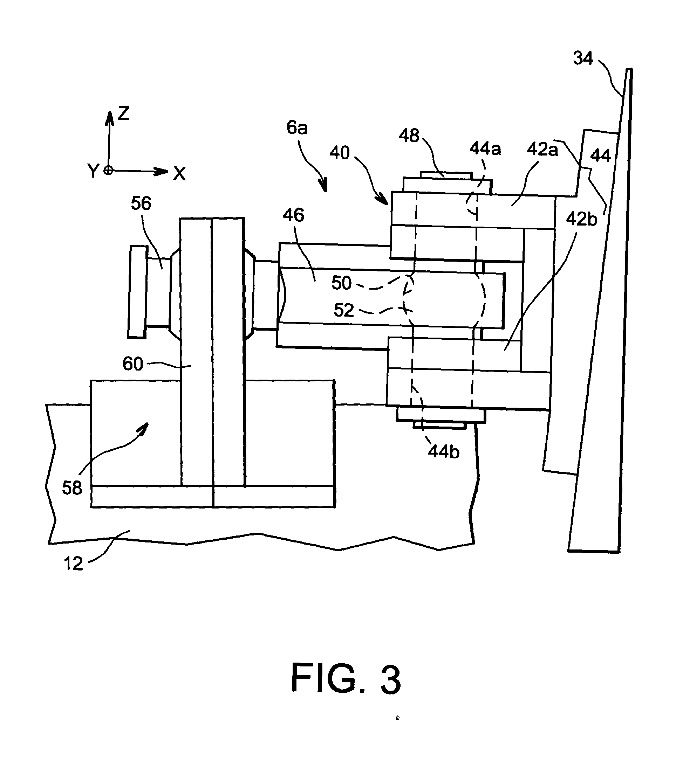

Ainsi, au niveau de chacune des deux paires de têtes 44, l'axe 48 traverse successivement l'orifice 44a de la tête supérieure 42a, un orifice traversant 50 pratiqué dans l'extrémité concernée de la ferrure intermédiaire 46, et enfin l'orifice 44b de la tête inférieure 42b. De plus, l'orifice traversant 50 indiqué ci-dessus est adapté pour coopérer avec une rotule 52 de l'axe 48, comme on peut l'apercevoir sur la figure 3.

De cette manière, il est à comprendre que la présence de ces deux axes 48 permet d'obtenir deux liaisons rotules orientées selon la direction Z et disposées de façon symétrique par rapport au plan fictif vertical indiqué précédemment.

Au niveau de la jonction des deux branches du V constituant la ferrure intermédiaire 46, l'attache avant 6a comporte un pion 56 orienté selon la direction X et solidaire de cette même ferrure intermédiaire 46, le pion 56 étant traversé diamétralement par le plan fictif vertical. L'ensemble constitué par le pion 56 et la ferrure intermédiaire 46 prend donc la forme d'un « Y » dont la branche inférieure est orientée vers l'avant, selon la direction X.

Le pion 56 est monté avec jeu dans la direction X sur une seconde ferrure 58 solidaire du turboréacteur 2, et plus précisément sur la portion supérieure de la partie annulaire périphérique 18 du carter de soufflante 12.

En d'autres termes, la liaison mécanique réalisée entre le pion 56 et la seconde ferrure 58 est du type « monoball », à savoir qu'elle permet à elle seule la reprise des effort s'exerçant selon les directions Y et Z, alors qu'un jeu dans la direction X est autorisé. En conséquence, le pion 56 peut éventuellement coulisser de façon très limitée dans la direction X par rapport à un orifice (non représenté) qu'il traverse et qui est pratiqué dans une tête 60 de la seconde ferrure 58, orientée dans un plan YZ et éventuellement double.

L'association de la liaison du type monoball à jeu selon la direction X et des deux rotules orientées selon la direction Z conduit alors la première attache avant 6a, combinée aux autres attaches, à reprendre uniquement les efforts s'exerçant selon la direction Y du turboréacteur 2.

Bien entendu, diverses modifications peuvent être apportées par l'homme du métier à l'ensemble moteur 1 pour aéronef qui vient d'être décrit, uniquement à titre d'exemple non limitatif. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure.

D'autre part, il est naturellement envisageable d'adopter toute autre configuration pour les attaches 6b, 8. A titre d'exemple illustratif, la seconde attache avant 6b pourrait être conçue de manière à assurer la reprise des efforts s'exerçant selon les trois directions X, Y et Z, impliquant que l'attache arrière 8 serait alors conçue de manière à assurer uniquement la reprise des efforts s'exerçant selon la direction Y et selon la direction Z du turboréacteur, mais pas ceux s'exerçant selon la direction X.

## Revendications

1. Ensemble moteur (1) pour aéronef comprenant un turbomoteur (2), un mât d'accrochage (4) ainsi qu'une pluralité d'attaches moteur (6a, 6b, 8) interposées entre ledit mât d'accrochage (4) et le turbomoteur (2), **caractérisé en ce que** ladite pluralité d'attaches moteur (6a, 6b, 8) comprend une attache (6a) conçue de manière à assurer uniquement la reprise des efforts s'exerçant selon une direction transversale (Y) du turbomoteur (2), cette attache (6a) comportant une ferrure intermédiaire (46) assemblée de manière pivotante sur une première ferrure (40) solidaire du mât d'accrochage (4) par l'intermédiaire de deux axes rotulés (48) orientés parallèlement selon une direction verticale (Z) du turbomoteur (2), ainsi qu'un pion (56) orienté selon une direction longitudinale (X) du turbomoteur (2) et solidaire de ladite ferrure intermédiaire (46), ledit pion (56) étant monté avec jeu dans la direction longitudinale (X) sur une seconde ferrure (58) solidaire du turbomoteur (2).

2. Ensemble (1) pour aéronef selon la revendication 1, **caractérisé en ce que** ladite attache (6a) conçue de manière à assurer uniquement la reprise des efforts s'exerçant selon la direction transversale (Y) est solidarisée d'une part à l'avant d'une structure rigide (10) du mât d'accrochage (4), et d'autre part sur une partie annulaire périphérique (18) d'un carter de soufflante (12) du turbomoteur (2).

3. Ensemble (1) pour aéronef selon la revendication 1 ou la revendication 2, **caractérisé en ce qu'**un plan défini par un axe longitudinal (5) du turbomoteur (2), et la direction verticale (Z) de celui-ci, constitue un plan de symétrie pour ladite attache (6a) conçue de manière à assurer uniquement la reprise des efforts s'exerçant selon la direction transversale (Y).

4. Ensemble (1) pour aéronef selon l'une quelconque des revendications précédentes, **caractérisé en ce que** ladite attache (6a) conçue de manière à assurer uniquement la reprise des efforts s'exerçant selon la direction transversale (Y) constitue une première attache avant, et **en ce que** ladite pluralité d'attaches moteur (6a, 6b, 8) comprend une seconde attache avant (6b) également conçue de manière à assurer la reprise des efforts s'exerçant selon la direction transversale (Y), les deux attaches avant (6a, 6b) étant agencées de façon décalée l'une par rapport à l'autre dans la direction verticale (Z) du turbomoteur (2).

5. Ensemble (1) pour aéronef selon la revendication 4, **caractérisé en ce que** ladite seconde attache avant (6b) est solidaire d'un carter central (16) du turbomoteur (2), et conçue de manière à assurer uniquement la reprise des efforts s'exerçant selon les directions transversale (Y) et verticale (Z).

6. Ensemble (1) pour aéronef selon l'une quelconque des revendications précédentes, **caractérisé en ce que** ladite pluralité d'attaches (6a, 6b, 8) comporte également une attache arrière (8) conçue de manière à assurer la reprise des efforts s'exerçant selon les directions longitudinale (X), transversale (Y) et verticale (Z).

7. Aéronef **caractérisé en ce qu'**il comprend au moins un ensemble moteur (1) selon l'une quelconque des revendications précédentes.

## Claims

1. Engine assembly (1) for an aircraft comprising a turbojet (2), a engine mount pylon (4) and a plurality of engine mounts (6a, 6b, 8) inserted between said engine mount pylon (4) and the turbojet (2), **characterised in that** said plurality of engine mounts (6a, 6b, 8) comprises a engine mount (6a) designed so as to uniquely resist forces applied along a direction (Y) transverse to the turbojet (2), this engine mount (6a) comprising an intermediate fitting (46) assembled in rotation motion onto a first fitting (40) fixed to the engine mount pylon (4) through two swivel axes (48) oriented parallel along a vertical direction (Z) of the turbojet (2), and a pin (56) oriented along a longitudinal direction (X) of the turbojet (2) and fixed to said intermediate fitting (46), said pin (56) being installed on a second fitting (58) fixed to the turbojet (2), with clearance along the longitudinal direction (X).

2. Assembly (1) for an aircraft according to claim 1, **characterised in that** said engine mount (6a) designed so as to resist only forces applied along the transverse direction (Y) is fixed firstly to the front part of a rigid structure (10) of the engine mount pylon (4), and secondly to a peripheral annular part (18) of a fan case (12) of the turbojet (2).

3. Assembly (1) for an aircraft according to claim 1 or claim 2, **characterised in that** a plane defined by a longitudinal axis (5) of the turbojet (2), and the vertical direction (Z) of the turbojet, forms a plane of symmetry for said engine mount (6a) designed so as to resist forces applied along the transverse direction (Y) only.

4. Assembly (1) for an aircraft according to any one of the previous claims, **characterised in that** said engine mount (6a) designed so as to simply resist forces applied along the transverse direction (Y) only forms a first front engine mount, and **in that** said plurality of engine mounts (6a, 6b, 8) comprises a second front engine mount (6b) also designed to resist forces applied along the transverse direction (Y), the two front engine mounts (6a, 6b) being arranged offset from each other in the vertical direction (Z) of the turbojet (2).

5. Assembly (1) for an aircraft according to claim 4, **characterised in that** said second front engine mount (6b) is fixed to a centre case (16) of the turbojet (2), and is designed to resist only forces applied along the transverse direction (Y) and the vertical direction (Z).

6. Assembly (1) for an aircraft according to any one of the previous claims, **characterised in that** said plurality of engine mounts (6a, 6b, 8) also comprise an aft engine mount (8) designed so as to resist forces applied along the longitudinal direction (X), the transverse direction (Y) and the vertical direction (Z).

7. Aircraft **characterised in that** it comprises at least one engine assembly (1) according to any one of the previous claims.

## Patentansprüche

1. Triebwerkseinheit (1) für ein Flugzeug, das ein Turbotriebwerk (2), eine Montagestruktur (4) sowie mehrere Triebwerksbefestigungen (6a, 6b, 8), die zwischen die Montagestruktur (4) und das Turbotriebwerk (2) eingefügt sind, umfasst,
**dadurch gekennzeichnet, dass** die mehreren Triebwerksbefestigungen (6a, 6b, 8) eine Befestigung (6a) umfassen, die derart gestaltet ist, dass nur die Aufnahme der Kräfte, die in einer Querrichtung (Y) des Turbotriebwerks (2) ausgeübt werden, sichergestellt ist, wobei diese Befestigung (6a) einen Zwischenbeschlag (46) aufweist, der an einem ersten Beschlag (40), der mit der Montagestruktur (4) verbunden ist, mittels zweier Drehachsen (48), die parallel zu einer Vertikalenrichtung (Z) des Turbotriebwerks (2) ausgerichtet sind, drehbar angebracht ist, sowie einen Zapfen (56) aufweist, der in einer Längsrichtung (X) des Turbotriebwerks (2) ausgerichtet ist und mit dem Zwischenbeschlag (46) verbunden ist, wobei der Zapfen (56) mit einem Spiel in der Längsrichtung (X) an einem zweiten Beschlag (58), der mit dem Turbotriebwerk (2) verbunden ist, angebracht ist.

2. Einheit (1) für ein Flugzeug nach Anspruch 1, **dadurch gekennzeichnet, dass** die Befestigung (6a), die derart gestaltet ist, dass nur die Aufnahme der Kräfte, die in der Querrichtung (Y) ausgeübt werden, sichergestellt ist, einerseits vorne an einer festen Struktur (10) der Montagestruktur (4) und andererseits an einem Umfangsringbereich (18) eines Fangehäuses (12) des Turbotriebwerks (2) befestigt ist.

3. Einheit (1) für ein Flugzeug nach Anspruch 1 oder Anspruch 2, **dadurch gekennzeichnet, dass** eine Ebene, die durch eine Längsachse (5) des Turbotriebwerks (2) und die Vertikalenrichtung (Z) desselben festgelegt ist, eine Symmetrieebene für die Befestigung (6a), die derart gestaltet ist, dass nur die Aufnahme der Kräfte, die in der Querrichtung (Y) ausgeübt werden, sichergestellt ist, bildet.

4. Einheit (1) für ein Flugzeug nach einem der vorhergehenden Ansprüche, **dadurch gekennzeichnet, dass** die Befestigung (6a), die derart gestaltet ist, dass nur die Aufnahme der Kräfte, die in der Querrichtung (Y) ausgeübt werden, sichergestellt ist, eine erste vordere Befestigung bildet und dass die mehreren Triebwerksbefestigungen (6a, 6b, 8) eine zweite vordere Befestigung (6b), die ebenfalls derart gestaltet ist, dass die Aufnahme der Kräfte, die in der Querrichtung (Y) ausgeübt werden, sichergestellt ist, umfassen, wobei die zwei vorderen Befestigungen (6a, 6b) in der Vertikalenrichtung (Z) des Turbotriebwerks (2) gegeneinander verschoben angeordnet sind.

5. Einheit (1) für ein Flugzeug nach Anspruch 4, **dadurch gekennzeichnet, dass** die zweite vordere Befestigung (6b) mit einem zentralen Gehäuse (16) des Turbotriebwerks (2) verbunden ist und derart gestaltet ist, dass nur die Aufnahme der Kräfte, die in der Querrichtung (Y) und der Vertikalenrichtung (Z) ausgeübt werden, sichergestellt ist.

6. Einheit (1) für ein Flugzeug nach einem der vorhergehenden Ansprüche, **dadurch gekennzeichnet, dass** die mehreren Befestigungen (6a, 6b, 8) auch eine hintere Befestigung (8) umfassen, die derart gestaltet ist, dass die Aufnahme der Kräfte, die in der Längsrichtung (X), der Querrichtung (Y) und der Vertikalenrichtung (Z) ausgeübt werden, sichergestellt ist.

7. Flugzeug, **dadurch gekennzeichnet, dass** es mindestens eine Triebwerkseinheit (1) nach einem der vorhergehenden Ansprüche umfasst.
